# EUROPEAN PATENT APPLICATION

(11) **EP 4 131 266 A1**
(43) Date of publication of application: **08.02.2023**
(21) Application number: 20928918.0
(22) Date of filing: 31.03.2020
(51) Int. Cl.: G10L 25/30, G10L 25/51

(54) **INFORMATION PROCESSING DEVICE, INFORMATION PROCESSING METHOD, AND INFORMATION PROCESSING PROGRAM**

(71) Applicant: Sony Group Corporation, Minato-Ku, Tokyo, 108-0075 (JP)
(72) Inventor: TAKAHASHI, Kei, Tokyo 108-0075 (JP); INAGAKI, Takeo, Tokyo 108-0075 (JP); YAMAMOTO, Yuki, Tokyo 108-0075 (JP); KINOSHITA, Takashi, Tokyo 108-0075 (JP)
(74) Representative: D Young & Co LLP
(86) International application number: PCT/JP2020/014817
(87) International publication number: WO 2021/199284

(57) **Abstract**

In a conventional method of detecting a user position from footsteps of a user collected by microphones installed in a user's home, it is necessary to precisely align the microphones in advance to an extent of coordinates. This is inconvenient for both system and user. Provided is an information processing apparatus including an acquisition unit that acquires sound data recorded by a plurality of microphones installed in arbitrary places and relative positions, from the microphones, of footsteps included in the sound data, and a learning unit that generates a learning model by learning training data including the sound data as input and the relative positions as correct answers. As a result, precise positioning of the microphones in the user's home becomes unnecessary, and the user position can be detected in a more convenient manner for both the system and the user.

## Description

### Field

The present disclosure relates to an information processing apparatus, an information processing method, and an information processing program.

### Background

There is a technique of detecting a user position from user's footsteps collected by a microphone installed in a user's home, and outputting a sound from an arbitrary speaker according to the user position or changing brightness of a light.

### Citation List

### Patent Literature

Patent Literature 1: JP 2006-148357 A

### Summary

### Technical Problem

However, in such position detection, it is necessary to precisely align microphones in advance to an extent of coordinates. Furthermore, a position detected is, for example, a two-dimensional position such as 2 m to the north and 3 m to the east from the origin. Detection in this manner is not so convenient for both system and user.

Therefore, the present disclosure proposes an information processing apparatus, an information processing method, and an information processing program capable of detecting a user position in a more convenient manner for both the system and the user without requiring precise alignment of microphones in a user's home.

### Solution to Problem

### Brief Description of Drawings

FIG. 1 is a diagram illustrating a configuration example of an information processing system according to the present embodiment.
FIG. 2 is a diagram illustrating an installation example of microphones 20 according to the embodiment.
FIG. 3 is a block diagram illustrating a functional configuration example of an information processing apparatus 100 according to the embodiment.
FIG. 4 is a diagram illustrating an example of a learning method according to the embodiment.
FIG. 5 is a diagram illustrating an example of learning of a user position estimation model according to the embodiment.
FIG. 6 is a diagram illustrating an example of a relearning method according to the embodiment.
FIG. 7 is a diagram illustrating an example of an instruction to a user terminal 200 according to the embodiment.
FIG. 8 is a diagram illustrating an example of estimation and relearning of the user position by the user position estimation model according to the embodiment.
FIG. 9 is a diagram illustrating an example of a room layout estimation method according to the embodiment.
FIG. 10 is a diagram illustrating another example of the room layout estimation method according to the embodiment.
FIG. 11 is a flowchart illustrating a flow of a relearning process of the user position estimation model based on the instruction to the user according to the embodiment.
FIG. 12 is a flowchart illustrating a flow of a user position estimation process by the user position estimation model according to the embodiment.
FIG. 13 is a block diagram illustrating a hardware configuration example of the information processing apparatus 100 according to the embodiment.

### Description of Embodiments

Hereinafter, the present embodiment will be detailed with reference to the drawings. Note that, in the present specification and the drawings, substantially the same parts are given the same reference signs to omit duplicate description.

The description will be given in the following order.
1. Embodiment
   1.1. Functional configuration example
   1.2. Details of functions
   1.3. Functional flow
2. Hardware configuration example
3. Summary

### <1. Embodiment>

### <<1.1. Functional configuration example>>

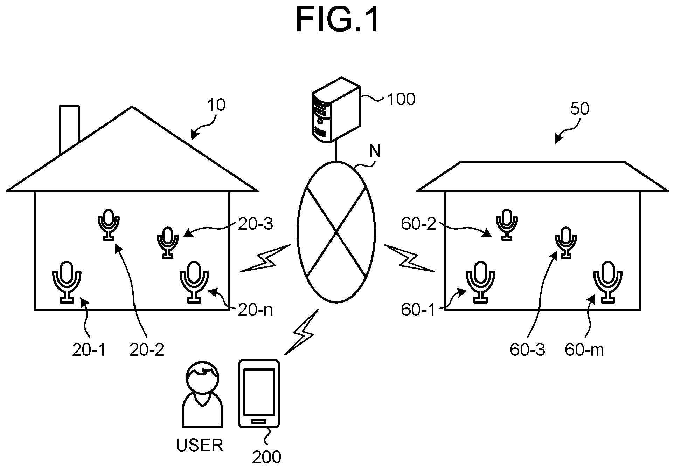

First, an information processing system according to the present embodiment will be described. FIG. 1 is a diagram illustrating a configuration example of the information processing system according to the present embodiment. As illustrated in FIG. 1, the information processing system includes an information processing apparatus 100, a user terminal 200, microphones 20-1 to 20-n (n is an arbitrary integer, and hereinafter collectively referred to as microphones 20) installed in a user's home 10, and learning microphones 60-1 to 60-m (m is an arbitrary integer, and hereinafter collectively referred to as learning microphones 60) installed in a development facility 50. The information processing apparatus 100 and various apparatuses are communicably connected to each other via a network N. The network N may employ various communication networks such as the Internet, regardless of wired or wireless.

The information processing apparatus 100 is a server apparatus managed by a provider or the like of a service using the information processing system in FIG. 1. Alternatively, the information processing apparatus 100 may be a cloud server apparatus managed by a provider of a cloud computing service.

The information processing apparatus 100 estimates a user position from user's footsteps detected in the user's home 10 using a learning model, and provides a necessary service to the user according to the user position. Specifically, the service to be provided is a service that outputs a sound or music from a speaker in a room where the user is present, or changes brightness of a light according to the user position in the home. Other conceivable services include, for example, a service for outputting a warning sound or voice from a predetermined speaker in a case where a housekeeper approaches a preset entry prohibited area when the user uses a home service, a service for notifying a user terminal 200 or the like in a case where a suspicious person intrudes into the user's home 10 while the user is absent from home, and a caring service for an elderly user. Note that, by registering footsteps of each user (e.g., each family member) in the information processing apparatus 100, the information processing apparatus 100 may also estimate the user position of each user to provide a service suitable for each user.

A functional configuration of the information processing apparatus 100 will be described later. Note that, in FIG. 1, the information processing apparatus 100 is illustrated as one computer, but may be a distributed computing system including a plurality of computers. In particular, processing in a learning phase of the learning model and processing in a recognition (estimation) phase will probably be separately executed by different apparatuses.

The user terminal 200 is a terminal used by the user who uses various services. The user terminal 200 may be a mobile terminal such as a smartphone or a tablet PC, or may be a stationary terminal installed in the user's home 10 or the like. An application including a user interface (UI) for using various services may be installed in the user terminal 200. Alternatively, the application may be a web application provided by the information processing apparatus 100 or the like.

The user can receive various services from the information processing apparatus 100 or the like via the user terminal 200, and can also receive an instruction, from the information processing apparatus 100, for causing a user position estimation model to relearn by the user himself/herself. Furthermore, the user performs movement accompanied by sound of footsteps for relearning of the user position estimation model in accordance with the instruction from the information processing apparatus 100, and transmits instruction data indicating start or end of the movement to the information processing apparatus 100 via the user terminal 200 at the start or end of the movement.

Furthermore, the user can input text via the user terminal 200 to set a label (e.g., one of the microphone 20 installed in a kitchen is labeled "kitchen" or the like) for each of the microphones 20.

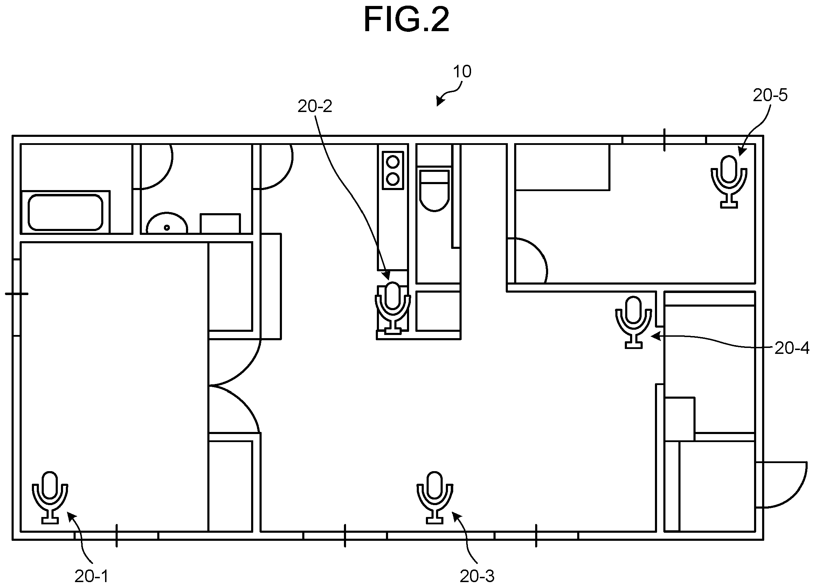

The microphones 20 are microphone devices installed at arbitrary places in the user's home 10 in order to record the user's footsteps and the like. FIG. 2 is a diagram illustrating an installation example of the microphones 20 according to the present embodiment. As illustrated in FIG. 2, for example, a plurality of microphones 20 is installed in each main room of the user's home 10. Note that, in FIG. 2, five microphones including microphones 20-1 to 20-5 are installed, but the number of microphones installed may be more or less than five. Furthermore, installation positions of the microphones 20 are not limited to the inside of the user's home 10, and may be a garden, a garage, or the like. Note that the microphones 20 may be an information processing terminal (corresponding to a slave terminal) having a microphone function, a smart speaker, or the like.

The learning microphones 60 are microphone devices installed in an arbitrary place such as the development facility 50 for preliminary learning of the user position estimation model implemented by a developer or the like. Note that the learning microphones 60 do not need to be special microphones, and "learning" is added to distinguish from the microphones 20.

In addition, although not illustrated, a human motion detector that detects human and its motion in the user's home 10, a camera that detects a person and an object, a time of flight (ToF) sensor, an infrared (IR) sensor, an acceleration sensor, a radar (radio wave) sensor, and the like may be further installed in the user's home 10. A service can be provided to the user based on situation in the user's home 10 detected by these various sensors.

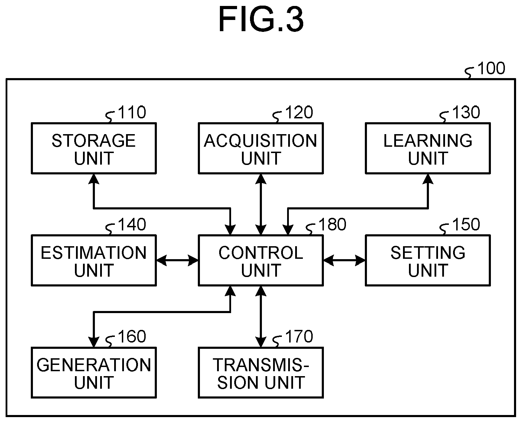

Next, a functional configuration of the information processing apparatus 100 according to the present embodiment will be described. FIG. 3 is a block diagram illustrating a functional configuration example of the information processing apparatus 100 according to the present embodiment. As illustrated in FIG. 3, the information processing apparatus 100 according to the present embodiment includes a storage unit 110, an acquisition unit 120, a learning unit 130, an estimation unit 140, a setting unit 150, a generation unit 160, a transmission unit 170, and a control unit 180.

### (Storage unit 110)

The storage unit 110 according to the present embodiment is a storage area for temporarily or permanently storing various programs and data. For example, the storage unit 110 can store programs and data for the information processing apparatus 100 to execute various functions. As a specific example, the storage unit 110 may store a program and data (including the learning model) for estimating the user position, and management data for managing various settings. Obviously, the above is merely an example, and the type of data stored in the storage unit 110 is not particularly limited.

### (Acquisition unit 120)

The acquisition unit 120 according to the present embodiment acquires sound data recorded by the plurality of learning microphones 60 in the learning phase of the learning model for estimating the user position (hereinafter referred to as the "user position estimation model"). Furthermore, the acquisition unit 120 acquires relative positions of the footsteps from the learning microphones 60.

The acquisition unit 120 also acquires sound data (corresponding to second sound data) recorded by the microphones 20 installed in the user's home 10. In addition, the acquisition unit 120 acquires the label set to each of the microphones 20.

In addition, the acquisition unit 120 receives and acquires, from the user terminal 200, the instruction data indicating start or end of movement (corresponding to first instruction data and third instruction data, respectively) for relearning of the user position estimation model.

### (Learning unit 130)

The learning unit 130 according to the present embodiment receives the sound data recorded by the plurality of learning microphones 60, and learns training data including the relative positions of the footsteps from the learning microphones 60 as correct answers to generate the user position estimation model that is the learning model. Furthermore, the learning unit 130 performs relearning of the user position estimation model by using the sound data recorded by the microphones 20 installed in the user's home 10.

Note that the learning model of the present embodiment includes an input layer to which the sound data including the footsteps is input, an output layer, a first element belonging to any layer from the input layer to the output layer but other than the output layer, and a second element whose value is calculated based on the first element and a weight of the first element. The learning model causes the information processing apparatus 100 to function and output, from the output layer, the relative positions of the footsteps from the microphones 20 or the learning microphones 60 according to the sound data input to the input layer.

Note that a generation device (e.g., the information processing apparatus 100 such as a server device) that generates the learning model of the present embodiment may generate the above-described learning model using any learning algorithm. For example, the generation device may generate the learning model of the present embodiment using a learning algorithm such as a neural network (NN), a support vector machine (SVM), clustering, or reinforcement learning. As an example, it is assumed that the generation device generates the learning model of the present embodiment using the NN. In this case, the learning model may have the input layer including one or more neurons, an intermediate layer including one or more neurons, and the output layer including one or more neurons.

Here, it is assumed that the learning model according to the present embodiment is realized by a regression model indicated by "y = a₁ * x₁ + a₂ * x₂ + ... + aᵢ * xᵢ". In this case, the first element included in the learning model corresponds to input data (xᵢ) such as x₁ and x₂. Further, the weight of the first element corresponds to coefficient aᵢ corresponding to xᵢ. Here, the regression model can be regarded as a simple perceptron having the input layer and the output layer. When each model is regarded as the simple perceptron, the first element can be regarded as any node included in the input layer, and the second element can be regarded as a node included in the output layer.

Furthermore, it is assumed that the learning model according to the present embodiment is realized by the NN including one or more intermediate layers such as a deep neural network (DNN). In this case, the first element included in the learning model corresponds to any node included in the input layer or the intermediate layer. In addition, the second element corresponds to a node of a next stage that is a node to which a value is transmitted from the node corresponding to the first element. In addition, the weight of the first element corresponds to a connection coefficient that is a weight considered for a value transmitted from the node corresponding to the first element to the node corresponding to the second element.

The relative positions of the footsteps from the microphones 20 or the learning microphones 60 are calculated using a learning model having an arbitrary structure such as the regression model or the NN described above. More specifically, in the learning model, when the sound data including the footsteps is input, a coefficient is set so as to output the relative positions of the footsteps from each of the microphones. The learning model according to the present embodiment may be a model generated based on a result obtained by repeating input and output of data.

Note that, the above example describes a case that the learning model according to the present embodiment is a model (referred to as model A) that outputs the relative positions of the footsteps from each of the microphones when the sound data including the footsteps is input. However, the learning model according to the present embodiment may be a model generated based on a result obtained by repeating input and output of data to and from the model A. For example, the learning model according to the present embodiment may be a learning model (referred to as a model B) that receives the sound data including the footsteps as an input and outputs the relative positions of the footsteps from each of the microphones output by the model A. Alternatively, the learning model according to the present embodiment may be a learning model that receives the sound data including the footsteps as an input and outputs the relative positions of the footsteps from each of the microphones output by the model B.

### (Estimation unit 140)

The estimation unit 140 according to the present embodiment estimates the user position based on a result output by inputting, to the user position estimation model, the sound data recorded by the microphones 20 installed in the user's home 10. In this case, the estimation unit 140 can estimate a relative position of the user from the label given to each of the microphones 20 and acquired by the acquisition unit 120 (e.g., the user is between a label "living Room" and a label "kitchen").

Furthermore, the estimation unit 140 estimates the position of a wall based on the user's footsteps included in the sound data recorded by the microphones 20. Furthermore, the estimation unit 140 estimates a distance between the microphones 20 and presence or absence of the wall based on sound output from each of the microphones 20. Furthermore, the estimation unit 140 estimates a room layout of the user's home 10 based on at least one of an estimated position or presence of the wall and the distance between the microphones 20.

### (Setting unit 150)

The setting unit 150 according to the present embodiment labels each of the microphones 20. Note that the setting unit 150 can label according to at least one of user's voice and environmental sound included in the sound data recorded by the microphones 20. Alternatively, the setting unit 150 can label the microphones 20 according to text data input by the user via the user terminal 200.

### (Generation unit 160)

The generation unit 160 according to the present embodiment generates a user movement route for relearning of the user position estimation model. In this case, the generation unit 160 can generate the user movement route based on, for example, the installation positions of the microphones 20 and the distance between the microphones 20.

### (Transmission unit 170)

The transmission unit 170 according to the present embodiment transmits a movement instruction to prompt the user to move to a predetermined position based on the movement route generated by the generation unit 160. In this case, the transmission unit 170 can transmit the movement instruction to the user terminal 200 in order to display the movement instruction via the UI on the user terminal 200 or output the movement instruction by voice from the user terminal 200. Alternatively, in order to cause another device such as the microphone 20 to output the movement instruction by voice, the transmission unit 170 may also transmit the movement instruction to the microphone 20 or the like.

Furthermore, for relearning of the user position estimation model, the transmission unit 170 transmits, to the microphones 20, the instruction data for start or end of recording (corresponding to second instruction data and fourth instruction data, respectively) in response to the instruction data for start or end of the movement acquired by the acquisition unit 120.

Furthermore, in a case where the user position has moved, for example, from a predetermined position indicated by the labels set on the microphones 20 to within a predetermined range or outside the predetermined range, the transmission unit 170 transmits the instruction data for providing an arbitrary service to the user to the user terminal 200, the microphone 20, or another terminal. More specifically, for example, in order to reproduce music suitable for the user when the user moves to the living room, the transmission unit 170 transmits the instruction data to music reproduction equipment, such as a smart speaker, installed in the living room.

### (Control unit 180)

The control unit 180 according to the present embodiment controls each component included in the information processing apparatus 100. Furthermore, in addition to the control of each component, the control unit 180 can control various terminals in the user's home 10 based on, for example, the situation in the user's home 10 detected by the various sensors in the user's home 10.

The functional configuration example of the information processing apparatus 100 according to the present embodiment has been described above. Note that the functional configuration described above with reference to FIG. 3 is merely an example, and the functional configuration of the information processing apparatus 100 according to the present embodiment is not limited thereto. For example, the information processing apparatus 100 does not necessarily include all of the components illustrated in FIG. 3, and can include each component, such as the learning unit 130 and the estimation unit 140, in another apparatus different from the information processing apparatus 100. In particular, a process related to the learning model is mainly divided into a learning phase and an estimation phase. The process of both phases may be executed by the same device or may be executed by different devices. The functional configuration of the information processing apparatus 100 according to the present embodiment can be flexibly modified according to specifications and operations.

In addition, the function of each component may be performed by reading a control program from a storage medium such as a read only memory (ROM) or a random access memory (RAM) storing the control program in which a process procedure for realizing these functions is described by an arithmetic device such as a central processing unit (CPU), and interpreting and executing the program. Therefore, it is possible to appropriately change the configuration to be used according to a technical level at the time of carrying out the present embodiment. Furthermore, an example of a hardware configuration of the information processing apparatus 100 will be described later.

### <<1.2. Details of functions>>

Next, functions of the information processing apparatus 100 according to the present embodiment will be described in detail. One of features of the information processing apparatus 100 according to the present embodiment is to generate the user position estimation model by inputting the sound data including the footsteps recorded by the learning microphones 60 and learning the training data including the relative positions of the footsteps from the learning microphones 60 as correct answers. First, a method of performing learning of the user position estimation model in the development facility 50 or the like will be described.

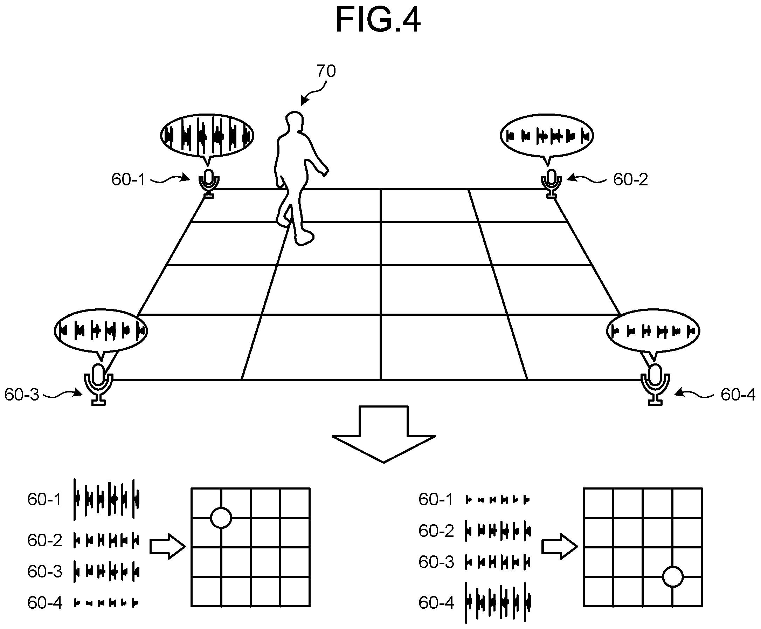

FIG. 4 is a diagram illustrating an example of a learning method according to the present embodiment. As illustrated in FIG. 4, the plurality of learning microphones 60 are installed. Then, a person 70 makes footsteps while moving to various positions, and each of the learning microphones 60 records the footsteps. In principle, unless there is a wall between the learning microphones 60 and the person 70, the learning microphone 60 closer to the person 70 records the footsteps of the person 70 as data with larger sound data (sound wave). For example, as illustrated in FIG. 4, when the person 70 makes footsteps at a position close to a learning microphone 60-1, an amplitude of the sound wave recorded by the learning microphone 60-1 becomes the largest, and an amplitude of the sound wave of other learning microphones 60 increases or decreases in inverse proportion to the distance to the person 70.

As illustrated in FIG. 4, recording is performed by each of the learning microphones 60 while the person 70 moves to various positions, and the sound data recorded by each of the learning microphones 60 and the relative position of each of the learning microphones 60 based on the footsteps (position of the person 70) are obtained as the training data for the user position estimation model. The relative position of each of the learning microphones 60 based on the footsteps is represented by a numerical value between 0 to 1, for example, and is set in advance by a developer or the like. More specifically, for example, the relative positions have values such as (Learning microphones 60-1, 60-2, 60-3, 60-4) = (0.8, 0.2, 0.2, 0.1) at the position of the person 70 illustrated in FIG. 4. In other words, the relative position is, for example, a probability (likelihood in the estimation phase) that the footstep has been made at the position where the learning microphone 60 is installed, and becomes 1, which is the maximum, when the footstep is made at the same position as the installation position of the learning microphone 60.

Note that, in order to improve a learning accuracy of the user position estimation model, various pieces of sound data serving as training data can be obtained. For example, the sound data is obtained by recording footsteps with the learning microphones 60 while changing conditions of the person 70 such as gender, age group, weight, and whether or not wearing footwear such as socks and slippers. Furthermore, the sound data can also be obtained by simulating a difference in sound echoes of the same user's footsteps depending on a floor material and a wall position, using a sound transfer function in the environment, or by generating, for example, pseudo data of child's footsteps from data of adult's footsteps, using a conversion filter prepared in advance.

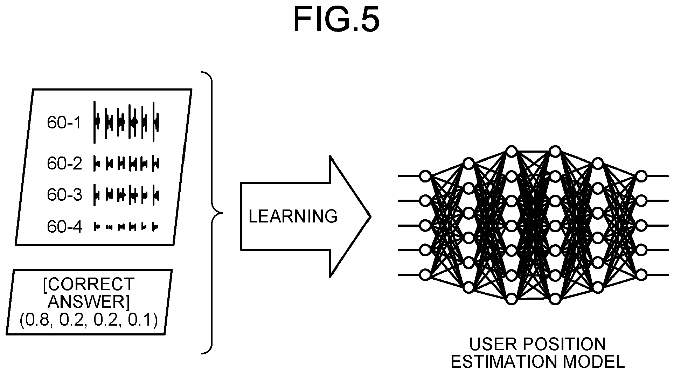

Learning of the user position estimation model is performed using the sound data and the relative positions obtained as described above. FIG. 5 is a diagram illustrating an example of learning of the user position estimation model according to the present embodiment. As illustrated in FIG. 5, the user position estimation model is caused to learn the sound data recorded by the plurality of learning microphones 60 and the relative positions, which is correct answer data, of the footsteps from the learning microphones 60.

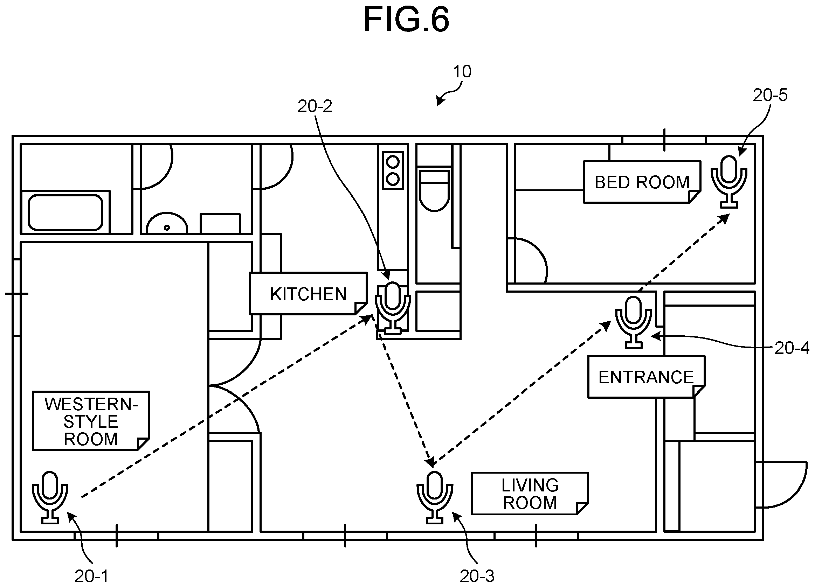

Next, a method of performing relearning, at the user's home 10, of the user position estimation model given learning in the development facility 50 or the like will be described. FIG. 6 is a diagram illustrating an example of a relearning method according to the present embodiment. As illustrated in FIG. 6, the microphones 20 are installed at arbitrary positions in the user's home 10, and each of the microphones 20 is labeled. For example, the label may be set by the user's voice such as "This is a western-style room" recorded by a microphone 20-1, or may be set by a cooking sound recorded by a microphone 20-2. Alternatively, the user may input text for an intended label of each of the microphones 20 via the user terminal 200. The label is freely changeable by the user at any time.

As indicated by a broken line in FIG. 6, the user walks between the microphones 20, so that the relearning of the user position estimation model is performed. However, an instruction to move may be received from the information processing apparatus 100 via the user terminal 200 or the microphones 20.

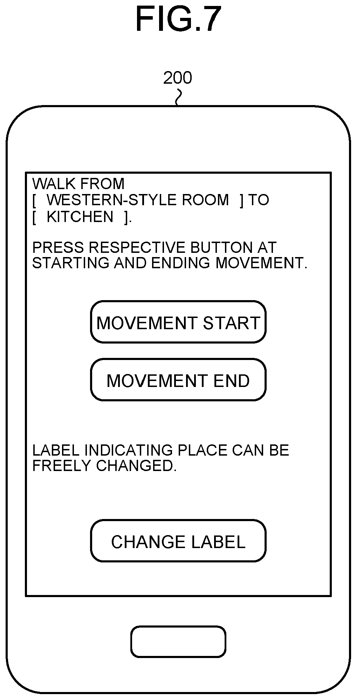

FIG. 7 is a diagram illustrating an example of the instruction to the user terminal 200 according to the present embodiment. In the example in FIG. 7, the user is instructed via the UI displayed on a display of the user terminal 200 to move from the western-style room where the microphone 20-1 is installed to the kitchen where the microphone 20-2 is installed. Note that the instruction to the user may be given by sound from each of the microphones 20.

When the user starts moving, for example, the instruction data indicating that the user starts to move is transmitted from the user terminal 200 to the information processing apparatus 100 by pressing a "movement start" button displayed on the user terminal 200. Thereafter, the instruction data for starting recording is transmitted from the information processing apparatus 100 to each of the microphones 20, and recording starts in each of the microphones 20. Note that, in a case where the instruction to the user is given via the microphones 20, the recording may start when the user utters a word, for example, "Starting to move" to the microphones 20. Alternatively, the recording may start by pressing a button provided on the microphone 20. The same applies to a case of ending the movement. However, regarding the stop of the recording, for example, the recording by the microphones 20 may be stopped by transmitting detection information to the information processing apparatus 100 when sufficient footsteps or stoppage of footsteps are detected by the microphones 20 at movement destinations, when stoppage of movement is detected by an inertial measurement unit (IMU) mounted on the user terminal 200, or when movement of the user to the microphone 20 at the movement destination is detected by various sensors such as the human motion detector and the camera installed near the microphone 20 or in the same casing.

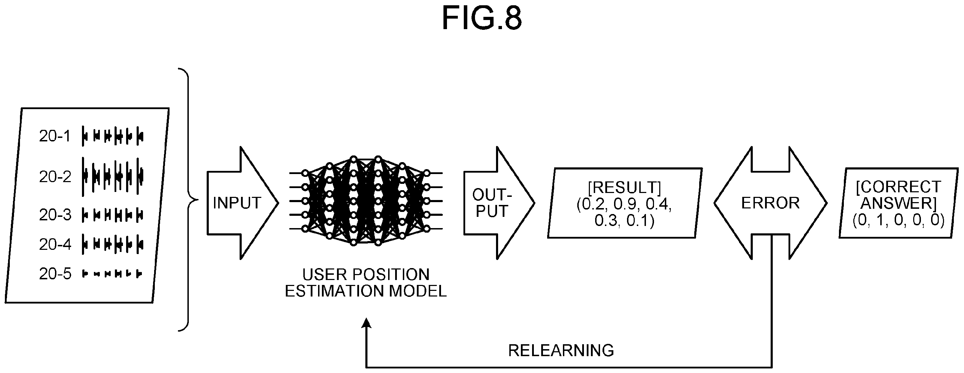

As described above, when the user walks between the microphones 20, the user positions are estimated using the sound data recorded by each of the microphones 20, so that relearning of the user position estimation model is performed. FIG. 8 is a diagram illustrating an example of estimation and relearning of the user positions by the user position estimation model according to the present embodiment. As illustrated in FIG. 8, the user positions are estimated by inputting the sound data recorded by the plurality of microphones 20 to the user position estimation model, and result data is output. In the example in FIG. 8, the result data is (Microphones 20-1, 20-2, 20-3, 20-4, 20-5) = (0.2, 0.9, 0.4, 0.3, 0.1), and it is estimated that the user is near the microphone 20-2, which is the kitchen.

Next, relearning of the user position estimation model is performed using an error between the output result data and the correct answer data. In the example in FIG. 8, for example, it is assumed that the user makes footsteps in the kitchen that is an installation position of the microphone 20-2. Then, the correct answer data is (Microphones 20-1, 20-2, 20-3, 20-4, 20-5) = (0, 1, 0, 0, 0). Therefore, the user position estimation model performs relearning using the error between the result data output from the user position estimation model and the correct answer data. Note that, since the sound data input to the user position estimation model does not change at the time of relearning, the relearning may be transfer learning or the like of only some layers of the user position estimation model.

Furthermore, in a case where the user movement route instructed at the time of relearning of the user position estimation model is, for example, a route as indicated by the broken lines in FIG. 6, actual movement of the user may differ due to a wall or the like between the microphones 20. With such movement of the user, the information processing apparatus 100 can estimate the presence or absence of the wall and the room layout of the user's home 10.

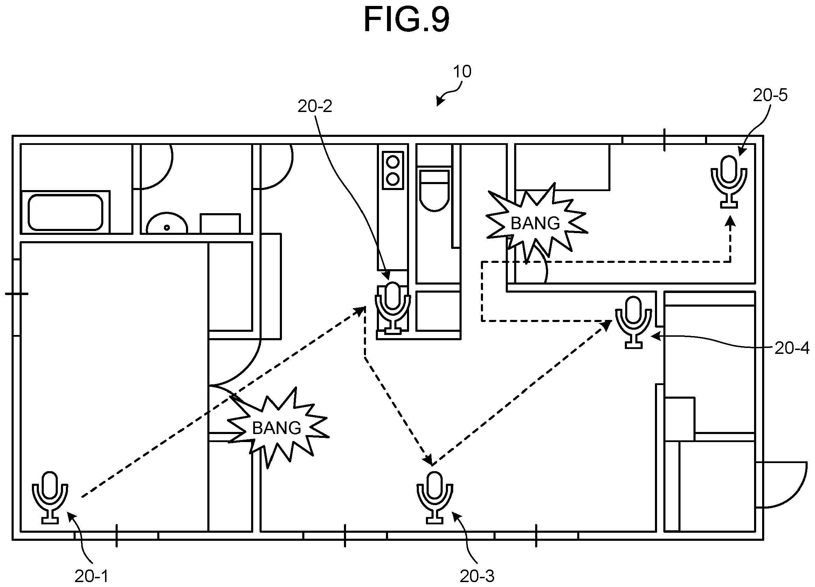

FIG. 9 is a diagram illustrating an example of a room layout estimation method according to the present embodiment. As illustrated in FIG. 9, since there is a wall between the microphones 20-4 and 20-5, the user detours because it is not possible to move between these microphones in the shortest distance. Furthermore, in a case where there is a wall between the microphone 20 and the user, the user's footsteps slightly attenuate. Furthermore, as described above, the information processing apparatus 100 can estimate the distance between the microphones 20. Therefore, the information processing apparatus 100 can estimate that the user is moving so as to avoid an obstacle such as a wall based on the sound data recorded by each of the microphones 20 and the distance between the microphones 20, and can thus estimate the room layout of the user's home 10.

Furthermore, as illustrated in FIG. 9, in a case where a door is present on the user movement route, an opening/closing sound of the door may be recorded together with the user's footsteps in the sound data recorded by the microphones 20. Therefore, the information processing apparatus 100 can further estimate the presence or absence and the position of the door based on the door opening/closing sound, and can thus estimate the room layout of the user's home 10.

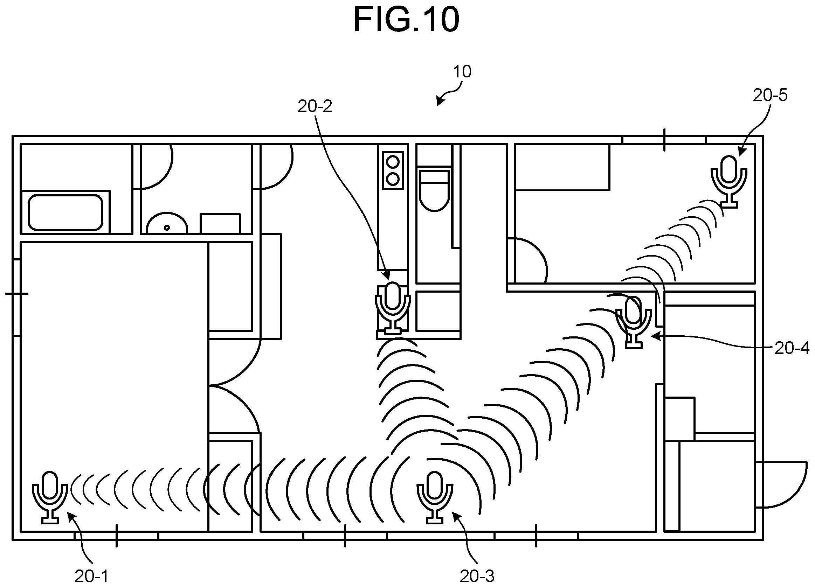

Furthermore, the information processing apparatus 100 can also estimate the room layout of the user's home 10 based on sound output from each other between the microphones 20. FIG. 10 is a diagram illustrating another example of the room layout estimation method according to the present embodiment. As illustrated in FIG. 10, for example, sound output from the microphone 20-3 is recorded by other microphones 20. For example, in a case where there is a wall between the microphones, such as the microphones 20-1 and 20-5 and the microphone 20-3, the sound output from the microphone 20-3 is more attenuated than when there is no wall. Next, the sound is output not only from the microphone 20-3 but also from other microphones 20, and is mutually recorded by the microphones 20. In this manner, by repeating sound output and recording between the microphones 20, the information processing apparatus 100 can estimate the room layout of the user's home 10 from the sound data collected. Furthermore, the information processing apparatus 100 can also estimate an approximate size of each room from the position of the wall estimated in this manner and reverberation of the sound output from the microphones 20.

As another room layout estimation method, for example, the user uses a camera function mounted on the user terminal 200 to perform panoramic photographing of each room or photographing while walking in the user's home 10, so that the information processing apparatus 100 can recognize stereoscopic space from video or images captured to estimate the room layout. In this case, by further turning on light mounted on the microphone 20, the information processing apparatus 100 can also estimate the positions of the microphones 20 based on the position of the light reflected in the video or images captured. Alternatively, the user can register the room layout in the user terminal 200 via a graphical user interface (GUI) on an application displayed on the user terminal 200.

### <<1.3. Functional flow>>

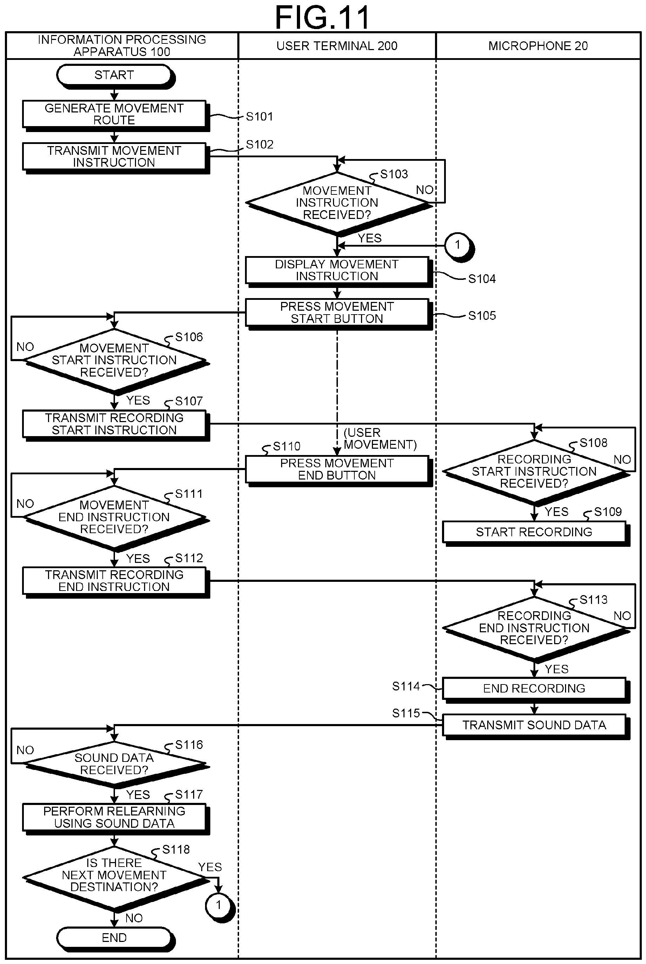

Next, a procedure for a relearning process of the user position estimation model will be described with reference to FIG. 11. FIG. 11 is a flowchart illustrating a flow of the relearning process of the user position estimation model based on the instruction to the user according to the present embodiment.

As illustrated in FIG. 11, first, the generation unit 160 of the information processing apparatus 100 generates the user movement route for relearning of the user position estimation model (Step S101). The movement route is generated so as to sequentially move to at least all the microphones 20 installed in the user's home 10 based on a mutual distance of the microphones 20, random selection of the microphones 20, and the like.

Next, the transmission unit 170 of the information processing apparatus 100 transmits, to the user terminal 200, the movement instruction that prompts the user to move to a predetermined position based on the movement route generated by the generation unit 160 (Step S102). The movement instruction is generated, for example, using the labels of the microphones 20 at a movement source and a movement destination, such as "Walk from the western-style room to the kitchen", so that the user can understand easily.

Next, the user terminal 200 determines whether or not the movement instruction transmitted from the information processing apparatus 100 has been received (Step S103). When it is determined that the movement instruction has not been received (Step S103: No), the user terminal 200 waits for reception of the movement instruction. When it is determined that the movement instruction has been received (Step S103: Yes), the user terminal 200 displays the movement instruction on the display (Step S104).

Next, the user presses the "movement start button" displayed on the display of the user terminal 200 (Step S105), and starts moving to the movement destination. In response to pressing of the "movement start button", the user terminal 200 transmits a movement start instruction to the information processing apparatus 100.

Next, the acquisition unit 120 of the information processing apparatus 100 determines whether or not the movement start instruction transmitted from the user terminal 200 has been received (Step S106). When it is determined that the movement start instruction has not been received (Step S106: No), the acquisition unit 120 waits for reception of the movement start instruction. When it is determined that the movement start instruction has been received (Step S106: Yes), the acquisition unit 120 acquires the movement start instruction. Then, in response to the acquisition of the movement start instruction, the transmission unit 170 of the information processing apparatus 100 transmits a recording start instruction to each of the microphones 20 (Step S107).

Next, the microphones 20 determine whether or not the recording start instruction transmitted from the information processing apparatus 100 have been received (Step S108). When it is determined that the recording start instruction has not been received (Step S108: No), the microphones 20 wait for reception of the recording start instruction. When it is determined that the recording start instruction has been received (Step S108: Yes), the microphones 20 start recording (Step S109).

Next, the user moves in the user's home 10 according to the movement instruction, and when arriving at the movement destination, the user presses a "movement end button" displayed on the display of the user terminal 200 (Step S110). In response to pressing of the "movement end button", the user terminal 200 transmits a movement end instruction to the information processing apparatus 100.

Next, the acquisition unit 120 of the information processing apparatus 100 determines whether or not the movement end instruction transmitted from the user terminal 200 has been received (Step 5111). When it is determined that the movement end instruction has not been received (Step S111: No), the acquisition unit 120 waits for reception of the movement end instruction. In a case where it is determined that the movement end instruction has been received (Step S111: Yes), the acquisition unit 120 acquires the movement end instruction. Then, in response to the acquisition of the movement end instruction, the transmission unit 170 of the information processing apparatus 100 transmits the recording end instruction to each of the microphones 20 (Step S112).

Next, the microphones 20 determine whether or not the recording end instruction transmitted from the information processing apparatus 100 have been received (Step S113). When it is determined that the recording end instruction has not been received (Step S113: No), the microphones 20 wait for reception of the recording end instruction. When it is determined that the recording end instruction has been received (Step S113: Yes), the microphone 20 ends the recording (Step S114), and transmits the sound data recorded to the information processing apparatus 100 (Step S115).

Next, the acquisition unit 120 of the information processing apparatus 100 determines whether or not the sound data transmitted from the microphone 20 has been received (Step S116). When it is determined that the sound data has not been received (Step S116: No), the acquisition unit 120 waits for reception of the sound data. When it is determined that the sound data has been received (Step S116: Yes), the acquisition unit 120 acquires the sound data. Then, in response to the acquisition of the sound data, the learning unit 130 of the information processing apparatus 100 performs relearning of the user position estimation model, using the sound data (Step S117).

Next, when there is a next movement destination (Step S118: Yes), a movement instruction to the next movement destination is displayed on the user terminal 200 (Step S104), and the process is repeated. Strictly speaking, after the movement end button is pressed (Step S110), the movement instruction to the next movement destination is displayed in the user terminal 200 (Step S104). On the other hand, when there is no next destination (Step S118: No), this process ends.

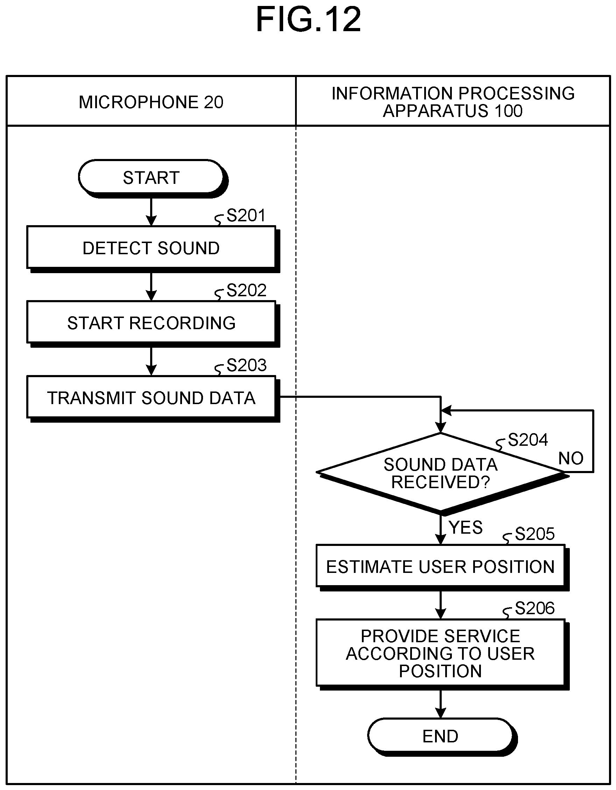

Next, a procedure for a user position estimation process by the user position estimation model will be described with reference to FIG. 12. FIG. 12 is a flowchart illustrating a flow of the user position estimation process by the user position estimation model according to the present embodiment.

As illustrated in FIG. 12, first, when sound is detected in the user's home 10 (Step S201), the microphones 20 start recording (Step S202). Note that the recording may be started when a person is detected by other sensors such as the human motion detector installed in the user's home 10.

Next, the microphones 20 transmit the sound data including the sound detected to the information processing apparatus 100 (Step S203).

Next, the acquisition unit 120 of the information processing apparatus 100 determines whether or not the sound data transmitted from the microphone 20 has been received (Step S204). When it is determined that the sound data has not been received (Step S204: No), the acquisition unit 120 waits for reception of the sound data. When it is determined that the sound data has been received (Step S204: Yes), the acquisition unit 120 acquires the sound data. Then, in response to the acquisition of the sound data, the estimation unit 140 of the information processing apparatus 100 estimates the user position based on a result output by inputting the sound data to the user position estimation model (Step S205).

Then, the information processing apparatus 100 provides a service corresponding to the estimated user position to the user (Step S206). The service according to the user position is, for example, a service of turning on a light of a room where the user is present, playing music from the nearest speaker, and issuing a warning or notifying the user terminal 200 when another person approaches the entry prohibited area. After Step S206, this process ends.

### <2. Hardware configuration example>

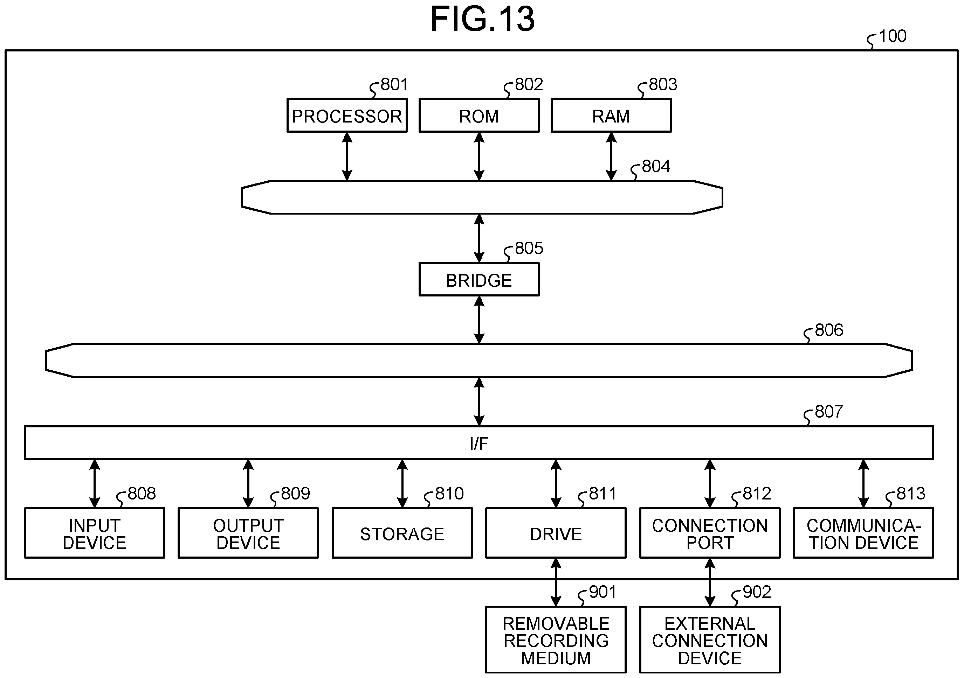

Next, a hardware configuration example of the information processing apparatus 100 according to the present embodiment will be described. FIG. 13 is a block diagram illustrating a hardware configuration example of the information processing apparatus 100 according to the present embodiment. Referring to FIG. 13, the information processing apparatus 100 includes, for example, a processor 801, a ROM 802, a RAM 803, a host bus 804, a bridge 805, an external bus 806, an interface 807, an input device 808, an output device 809, a storage 810, a drive 811, a connection port 812, and a communication device 813. Note that the hardware configuration illustrated here is an example, and some of the components may be omitted. In addition, components other than the components illustrated here may be further included.

### (Processor 801)

The processor 801 functions as, for example, an arithmetic processor or a controller, and controls the overall operation of each component or a part thereof based on various programs recorded in the ROM 802, the RAM 803, the storage 810, or a removable recording medium 901.

### (ROM 802 and RAM 803)

The ROM 802 is a unit that stores a program read by the processor 801, data used for calculation, and the like. The RAM 803 temporarily or permanently stores, for example, a program read by the processor 801, various parameters that appropriately change when the program is executed, and the like.

### (Host bus 804, bridge 805, external bus 806, and interface 807)

The processor 801, the ROM 802, and the RAM 803 are mutually connected via, for example, the host bus 804 capable of high-speed data transmission. On the other hand, the host bus 804 is connected to the external bus 806 having a relatively low data transmission speed via, for example, the bridge 805. In addition, the external bus 806 is connected to various components via the interface 807.

### (Input device 808)

As the input device 808, for example, a mouse, a keyboard, a touch panel, a button, a switch, a lever, and the like are used. Furthermore, as the input device 808, a remote controller (hereinafter, remote control) capable of transmitting a control signal using infrared rays or other radio waves may be used. Furthermore, the input device 808 includes a voice input device such as a microphone.

### (Output device 809)

The output device 809 is a device capable of visually or audibly notifying a user of acquired information, including a display device such as a cathode ray tube (CRT), a liquid crystal display (LCD), or an organic electroluminescence light (EL), an audio output device such as a speaker or a headphone, a printer, a mobile phone, or a facsimile. Furthermore, the output device 809 according to the present embodiment includes various vibrating devices capable of outputting tactile stimulation. In addition, the output device 809 may be a device that exclusively outputs sound, such as a smart speaker, and may have a text to speech (TTS) function of reading out a character string.

### (Storage 810)

The storage 810 is a device for storing various types of data. As the storage 810, for example, a magnetic storage device such as a hard disk drive (HDD), a semiconductor storage device, an optical storage device, or a magneto-optical storage device is used.

### (Drive 811)

The drive 811 is, for example, a device that reads information recorded on the removable recording medium 901 such as a magnetic disk, an optical disk, a magneto-optical disk, or a semiconductor memory, or writes information to the removable recording medium 901.

### (Connection port 812)

The connection port 812 is a port for connecting an external connection device 902 such as a universal serial bus (USB) port, an IEEE 1394 port, a small computer system interface (SCSI), an RS-232 C port, or an optical audio terminal.

### (Communication device 813)

The communication device 813 is a communication device for connecting to various communication networks including the Internet and a mobile network such as a mobile telephone network, and is, for example, a communication card for wired or wireless LAN, Bluetooth (registered trademark), or wireless USB (WUSB), a router for optical communication, a router for asymmetric digital subscriber line (ADSL), or a modem for various communications.

### (Removable recording medium 901)

The removable recording medium 901 is, for example, a DVD medium, a Blu-ray (registered trademark) medium, an HD DVD medium, or various semiconductor storage media. It is obvious that the removable recording medium 901 may also be, for example, an IC card on which a non-contact IC chip is mounted or an electronic device.

### (External connection device 902)

The external connection device 902 is, for example, a printer, a portable music player, a digital camera, a digital video camera, or an IC recorder.

### <3. Summary>

As described above, the information processing apparatus 100 includes the acquisition unit 120 that acquires the sound data recorded by the plurality of microphones installed in arbitrary places, and acquires the relative positions of the footsteps included in the sound data from the microphones, and the learning unit 130 that generates the learning model by inputting the sound data and learning the training data including the relative positions as correct answers.

As a result, it is not necessary to precisely align the microphones in the user's home 10, and it is possible to detect the user position in a more convenient manner for both the system and the user.

Although the preferred embodiments of the present disclosure have been described in detail with reference to the accompanying drawings, the technical scope of the present disclosure is not limited to the embodiments. It is obvious that a person having ordinary knowledge in the technical field of the present disclosure can conceive various changes or modifications within the scope of the technical idea described in the claims, and it is naturally understood that these also belong to the technical scope of the present disclosure.

Furthermore, the effects described in the present specification are merely illustrative or exemplary, and are not restrictive. In other words, the technology according to the present disclosure can exhibit other effects obvious to those skilled in the art from the description of the present specification in addition to or instead of the above effects.

Note that the present technology can also have the following configurations.

### Reference Signs List

- 10: USER'S HOME
- 20: MICROPHONE
- 50: DEVELOPMENT FACILITY
- 60: LEARNING MICROPHONE
- 70: PERSON
- 100: INFORMATION PROCESSING APPARATUS
- 110: STORAGE UNIT
- 120: ACQUISITION UNIT
- 130: LEARNING UNIT
- 140: ESTIMATION UNIT
- 150: SETTING UNIT
- 160: GENERATION UNIT
- 170: TRANSMISSION UNIT
- 200: USER TERMINAL

## Claims

1. An information processing apparatus comprising:
an acquisition unit configured to acquire sound data recorded by a plurality of microphones installed in an arbitrary place, and
acquire a relative position, from each of the plurality of microphones, of a footstep included in the sound data; and
a learning unit configured to generate a learning model by learning training data including the sound data as input and the relative position as a correct answer.

2. The information processing apparatus according to claim 1, further comprising an estimation unit configured to estimate a user position based on a result output by inputting second sound data to the learning model, wherein
the acquisition unit further acquires the second sound data recorded by a plurality of second microphones installed in a home of a user, the second sound data including a second footstep of the user.

3. The information processing apparatus according to claim 2, wherein
the acquisition unit further acquires a label given to each of the plurality of second microphones, and
the estimation unit estimates the user position as a relative position of the user from the label.

4. The information processing apparatus according to claim 3, further comprising a setting unit configured to label each of the plurality of second microphones according to at least one of user's voice and environmental sound included in the second sound data.

5. The information processing apparatus according to claim 1, wherein the acquisition unit further acquires second sound data recorded by a plurality of second microphones installed in a home of a user, the second sound data including a second footstep of the user at a predetermined position, and
the learning unit further performs relearning of the learning model by using the second sound data.

6. The information processing apparatus according to claim 5, further comprising:
a generation unit configured to generate a movement route of the user; and
a transmission unit configured to transmit a movement instruction to prompt the user to move to the predetermined position according to the movement route.

7. The information processing apparatus according to claim 6, wherein the transmission unit transmits the movement instruction to a user terminal used by the user in order to display the movement instruction via a user interface on the user terminal.

8. The information processing apparatus according to claim 7, wherein
the acquisition unit further acquires first instruction data for starting movement from the user terminal or a slave terminal equipped with one of the plurality of second microphones,
the transmission unit further transmits, in response to the first instruction data, second instruction data for starting recording to the slave terminal,
the acquisition unit further acquires third instruction data for stopping the movement from the user terminal or the slave terminal, and
the transmission unit further transmits, in response to the third instruction data, fourth instruction data for stopping the recording to the slave terminal.

9. The information processing apparatus according to claim 6, wherein the transmission unit transmits the movement instruction to at least one of a user terminal used by the user, a slave terminal equipped with one of the plurality of second microphones, and another terminal in order to output the movement instruction by voice from at least one of the user terminal, the slave terminal, and the another terminal.

10. The information processing apparatus according to claim 2, wherein the estimation unit further estimates a wall position based on the second footstep included in the second sound data.

11. The information processing apparatus according to claim 10, wherein the estimation unit further estimates a room layout of the home of the user based on the wall position.

12. The information processing apparatus according to claim 2, wherein the estimation unit further estimates at least one of a distance between the plurality of second microphones and presence or absence of a wall based on a sound mutually output from the plurality of second microphones included in the second sound data.

13. The information processing apparatus according to claim 12, wherein the estimation unit further estimates a room layout of the home of the user based on at least one of the presence or absence of the wall and the second footstep.

14. The information processing apparatus according to claim 2, further comprising a transmission unit configured to transmit instruction data for performing a predetermined operation so as to provide an arbitrary service to the user, the instruction data being transmitted to a user terminal used by the user, a slave terminal equipped with one of the plurality of second microphones, or another terminal when the user position moves within a predetermined range or outside the predetermined range with respect to a predetermined position.

15. A method using an information processing apparatus to implement:
acquiring sound data recorded by a plurality of microphones installed in an arbitrary place;
acquiring a relative position, from each of the plurality of microphones, of a footstep included in the sound data; and
generating a learning model by learning training data including the sound data as input and the relative position as a correct answer.

16. A program causing an information processing apparatus to execute:
acquiring sound data recorded by a plurality of microphones installed in an arbitrary place;
acquiring a relative position, from each of the plurality of microphones, of a footstep included in the sound data; and
generating a learning model by learning training data including the sound data as input and the relative position as a correct answer.
